# EUROPEAN PATENT SPECIFICATION

(11) **EP 0 919 418 B1**
(45) Date of publication and mention of the grant of the patent: **11.08.2004**
(21) Application number: 98122147.6
(22) Date of filing: 25.11.1998
(51) Int. Cl.: B60K 17/28

(54) **Transmission for vehicles operating in the field of agriculture, gardening, plant nursery management or the like**
Getriebe für in der Landwirtschaft, im Gartenbau, in der Pflanzenzüchtung und ähnlichem eingesetzte Fahrzeuge
Transmission pour véhicules utilisés dans le domaine d'agriculture, jardinage, pépinière et similaire

(30) Priority: 01.12.1997 IT PD970276
(43) Date of publication of application: 02.06.1999
(73) Proprietor: ANTONIO CARRARO S.p.A., 35011 Campodarsego (Padova) (IT)
(72) Inventor: Martignon, Girolamo, 35010 Borgoricco (Padova) (IT)
(74) Representative: Modiano, Guido, Dr.-Ing.

(56) References cited:
- EP-A- 0 652 128
- DE-B- 1 221 564
- FR-A- 1 443 896
- US-A- 3 374 681

## Description

The present invention relates to a transmission particularly for vehicles operating in the field of agriculture, gardening, plant nursery management or the like.

It is known that in the field of agriculture, but most of all in the field of gardening and plant nursery management, it is crucial to combine the power of the vehicle with a compact size.

Furthermore, there is a current increase in the demand for machines usable both in the agricultural field and in other services, such as for example green area maintenance, plant nursery management, etcetera, for which small axial dimensions are important.

However, even in these applications it is absolutely necessary for the power level to remain unchanged; likewise, the optimum characteristics of overall stability of the vehicle must also remain unchanged.

Transmissions are currently commercially available in which both the clutch/gearbox assembly and the power take-off are associated coaxially at the output of the driving shaft.

In these cases, in order to manage the operation of these units at the output of the driving shaft it is necessary to provide two coaxial clutches, one dedicated to the gearbox and one dedicated to the power take-off.

This entails considerable constructive complexity as well as an increase in terms of axial space occupation.

French Patent No. FR-A-1 443 896 discloses a power take-off for agricultural tractors, provided with an auxiliary gearbox. European Patent Application No. EP-A-0 652 128 discloses a clutch unit arrangement in a tractor power take-off. German Patent Publication No. 12 21 564 B discloses a gearbox for tractors. United States Patent No. US-A-3 374 681 discloses a transmission for motor vehicles used in the field of agriculture, gardening, plant nursery management or the like, comprising a power take-off which is coaxially connected to a driving shaft and a friction clutch and gearbox assembly which is kinematically connected to said driving shaft by means of meshing gears whose shafts are parallel thereto, said friction clutch and gearbox assembly including:
- one friction clutch;
- a first transmission shaft which is connected coaxially to said driving shaft and is partially contained in a case from which it protrudes so as to form the power take-off;
- a second transmission shaft which is parallel to said first shaft;
said first shaft supporting gears which mesh with said second transmission shaft;
said friction clutch being coaxially supported at one end of said second shaft and having a first portion which is kinematically connected to said second shaft, while a second portion is rotatably supported by the latter.

The aim of the present invention is to provide a transmission for vehicles in the field of agriculture, gardening and plant nursery management which indeed allows to achieve optimum ratios between the power of the vehicle and its dimensions, especially its axial dimensions.

Within the scope of this aim, an object of the present invention is to provide a transmission which is able to combine a level of performance and strength suitable for high power ratings with modest overall bulk.

A further object of the present invention is to provide a transmission whose functional capabilities, in terms of obtainable speeds, is competitive with respect to conventional transmissions.

A further object of the present invention is to provide a transmission which is particularly safe, has a competitive cost with respect to conventional transmissions and can be manufactured with conventional technologies.

This aim, these objects and others which will become apparent hereinafter are achieved by a transmission for motor vehicles according to claim 1.

Further characteristics and advantages of the present invention will become apparent from the following detailed description of an embodiment thereof, illustrated by way of nonlimitative example in the accompanying drawings, wherein:
Figure 1 is a sectional view of a transmission according to the invention;
Figure 2 is a further sectional view of a detail of the transmission of Figure 1;
Figure 3 is a schematic view of a hydraulic system adapted for the transmission of Figure 1.

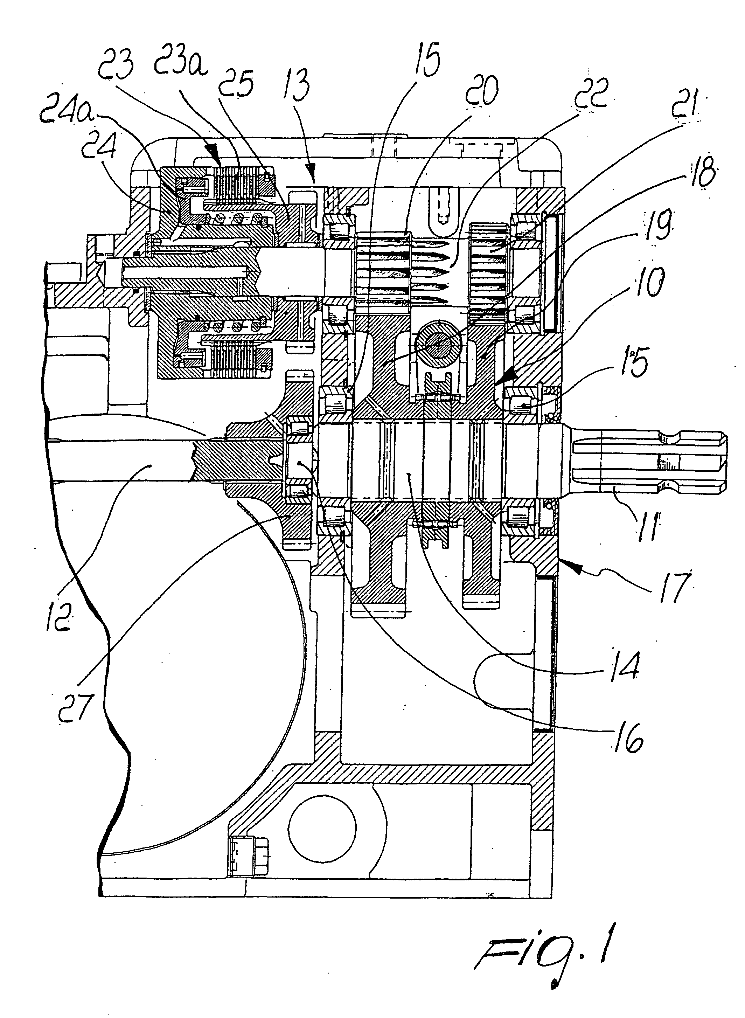

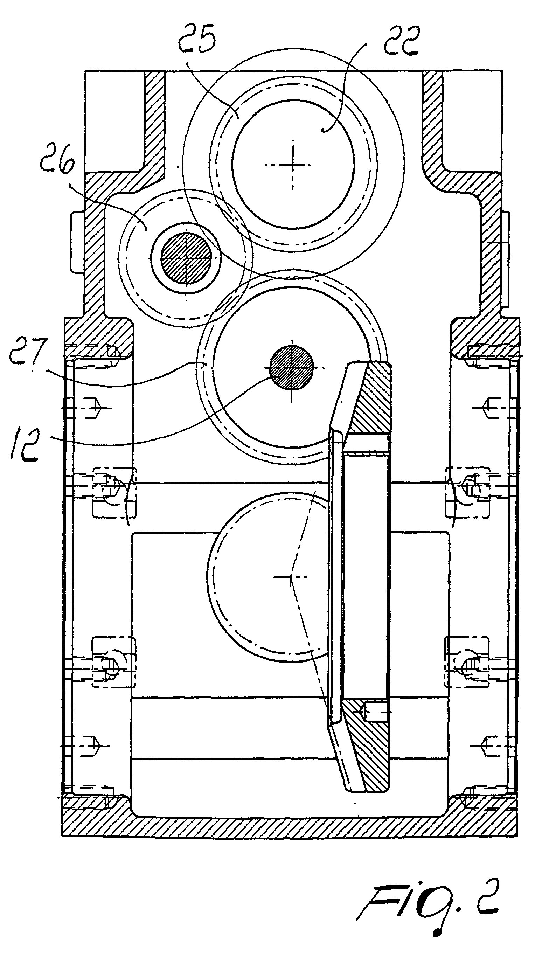

With particular reference to Figures 1 and 2, a transmission for vehicles used in the field of agriculture, gardening, plant nursery management or the like, according to the invention, is generally designated by the reference numeral 10.

The transmission 10 comprises a power take-off 11 which is coaxially connected to a driving shaft 12, which is only partially illustrated, and a gearbox/clutch assembly, generally designated by the reference numeral 13, which is kinematically connected to said driving shaft by means of shafts which are parallel thereto.

In particular, in this case the transmission 10 comprises a first transmission shaft 14, which is supported by bearings 15, is coaxially connected to the driving shaft 12 by means of a shank 16 and is partially contained in a case 17 from which it protrudes in order to form the splined power take-off 11.

The first shaft 14, in this case, supports first gears, designated by the reference numerals 18 and 19 respectively, which mesh with corresponding second gears, designated by the reference numerals 20 and 21 respectively, which are associated with a second shaft 22 which belongs to the gearbox/clutch assembly 13.

In this case the clutch, generally designated by the reference numeral 23, is coaxially supported by the second shaft 22 and is of the type with a plurality of discs in an oil bath.

The clutch 23 comprises, in this case, a first section 24, which is kinematically connected to the second shaft 22, and a second section 25, which is rotatably supported by the latter.

More specifically, by means of the pressure of the oil delivered by a hydraulic system, described in greater detail hereinafter, a piston 24a accommodated in the section 24 moves axially, moving sintered disks 23a (which constitute the actual friction core of the clutch 23) into mutual contact, thus producing kinematic contact between the section 24 and the section 25 and transferring the motion from the driving shaft 12 to the shaft 22.

The second section 25 is kinematically connected, by means of a so-called idler gear 26, to a gear 27 which is associated with the driving shaft 12.

In particular, in this case the clutch 23 thus provided allows insertion even when the vehicle is moving and loaded.

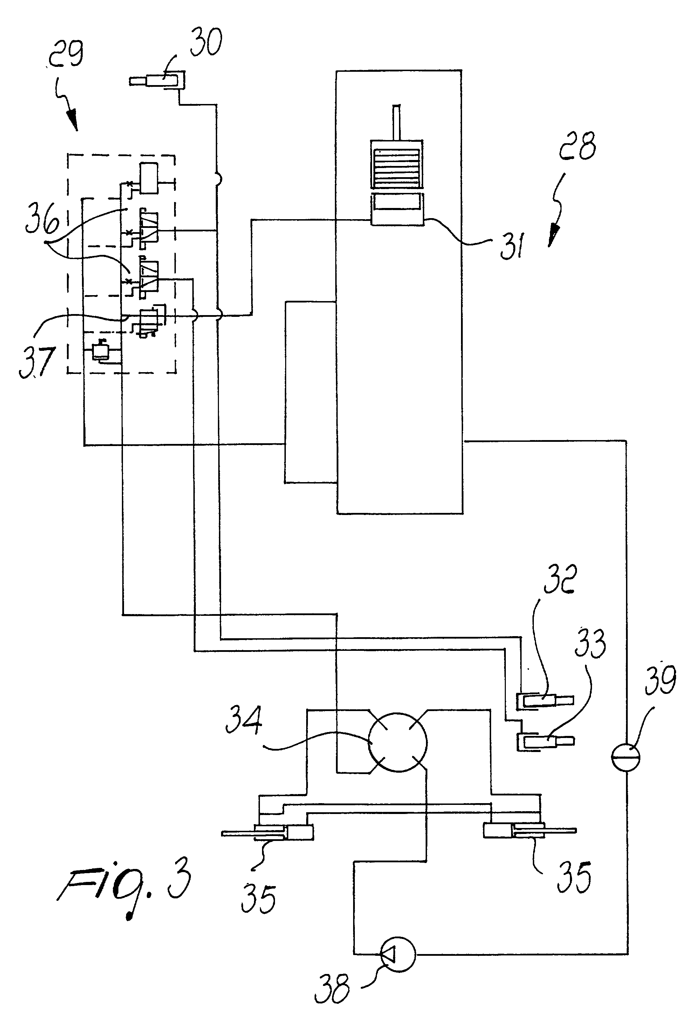

A hydraulic system particularly adapted for the transmission 10 is schematically illustrated with particular reference to Figure 3 and is generally designated by the reference numeral 28.

In particular, the hydraulic system 28 comprises a valve assembly, generally designated by the reference numeral 29, which is connected so as to control: an actuator 30 for locking the rear differential, not shown; an actuator 31 for the clutch 23; two actuators 32 and 33, respectively for locking the front differential and disengaging the front drive, also not shown; and a hydraulic power steering unit, generally designated by the reference numeral 34, which acts on double-acting cylinders 35 of the steering system, not shown.

The valve assembly 29 comprises electric valves 36 and a proportional valve 37 which is managed by electronic control means which are not illustrated and are of a per se known type; the proportional valve in particular is dedicated to the control of the clutch 23.

A fixed-displacement pump 38 with an intake filter 39 is associated with the hydraulic power steering unit 34 in the system 28.

In practice it has been observed that the present invention has achieved the intended aim and objects.

It should be noted that the transmission according to the invention allows to eliminate the double clutch for the power take-off and for the gearbox and is therefore axially compact.

In the transmission according to the invention, the clutch is in fact necessary only for the gearbox, since the power take-off is always connected to the driving shaft.

It should also be noted that the constructive simplicity of the transmission according to the invention is advantageous for overall structural strength and for low manufacturing costs.

It should also be noted that the transmission according to the invention is enhanced in terms of its optimum functionality by the hydraulic system assigned to it.

The present invention is susceptible of modifications and variations, all of which are within the scope of the inventive concept.

The constructive details may be replaced with other technically equivalent elements.

The materials and the dimensions may be any according to requirements.

The disclosures in Italian Patent Application No. PD97A000276 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A transmission (10) for motor vehicles used in the field of agriculture, gardening, plant nursery management or the like, comprising a power take-off (11) which is coaxially connected to a driving shaft (12) and a friction clutch (23) and gearbox assembly (13) which is kinematically connected to said driving shaft (12) by means of meshing gears (18, 19, 20, 21) whose shafts (12, 22) are parallel thereto, said friction clutch and gearbox assembly exclusively including:
- one friction clutch (23);
- a first transmission shaft (14) which is connected coaxially to said driving shaft (12) and is partially contained in a case (17) from which it protrudes so as to form the power take-off;
- a second transmission shaft (22) which is parallel to said first shaft (14);
said first shaft (14) supporting gears (18, 19) which mesh with said second transmission shaft (22);
said friction clutch (23) being coaxially supported at one end of said second shaft and having a first portion (24) which is kinematically connected to said second shaft (22), while a second portion (25) is rotatably supported by the latter, said second portion (25) being kinematically connected, by means of an idler gear (26), to a gear (27) which is associated with said driving shaft (12).

2. The transmission according to claim 1, **characterised in that** said first shaft (14) is connected to the driving shaft by means of a shank-type coupling.

3. The transmission according to one or more of the preceding claims, **characterised in that** said friction clutch (23) is of the multiple-disk type.

4. The transmission according to claim 1 and controlled by a hydraulic system, **characterised in that** the hydraulic system (28) comprises a valve assembly (29) which is connected so as to control an actuator (30) for locking a rear differential, an actuator (31) for the clutch (23), two actuators (32, 33) respectively for locking a front differential and for disengaging a front drive, and a hydraulic power steering unit (34) which acts on double-acting cylinders (35) of the steering system, said valve assembly (29) comprising one or more electric valves (36) and at least one proportional valve (37) which is managed by electronic control means, said proportional valve being dedicated in particular to the control of said clutch (23).

5. The transmission according to claim 4, **characterised in that** said hydraulic power steering unit (34) is supplied by a corresponding hydraulic pump with an intake filter.

## Patentansprüche

1. Getriebe (10) für Kraftfahrzeuge, die in dem Bereich Landwirtschaft, Gartenbau, Pflanzenzüchtung oder ähnlichem eingesetzt werden, umfassend eine Zapfwelle (11), die koaxial mit einer Antriebswelle (12) verbunden ist, und eine Reibungskupplung (23) und eine Getriebeanordnung (13), die kinematisch mit der Antriebswelle (12) mittels ineinandergreifender Zahnräder (18, 19, 20, 21) verbunden ist, deren Wellen (12, 22) parallel zu dieser sind, wobei die Reibungskupplung und die Getriebeanordnung ausschließlich enthalten:
- eine Reibungskupplung (23);
- eine erste Getriebewelle (14), die koaxial mit der Antriebswelle (12) verbunden und teilweise in einem Gehäuse (17) enthalten ist, aus dem sie derart hervorsteht, dass sie die Zapfwelle bildet;
- eine zweite Getriebewelle (22), die parallel zu der ersten Welle (14) ist;
wobei die erste Welle (14) Zahnräder (18, 19) lagert, die mit der zweiten Getriebewelle (22) in Eingriff stehen;
wobei die Reibungskupplung (23) an einem Ende der zweiten Welle koaxial gelagert ist und einen ersten Abschnitt (24) hat, der kinematisch mit der zweiten Welle (22) verbunden ist, während ein zweiter Abschnitt (25) drehbar durch die letztere gelagert ist, wobei der zweite Abschnitt (25) mittels eines Zwischenrads (26) kinematisch mit einem Zahnrad (27) verbunden ist, das der Antriebswelle (12) zugeordnet ist.

2. Getriebe nach Anspruch 1, **dadurch gekennzeichnet, dass** die erste Welle (14) mittels einer Schaftkupplung mit der Antriebswelle verbunden ist.

3. Getriebe nach einem oder mehreren der vorhergehenden Ansprüche, **dadurch gekennzeichnet, dass** die Reibungskupplung (23) eine Mehrscheibenkupplung ist.

4. Getriebe nach Anspruch 1, das durch ein hydraulisches System gesteuert ist, **dadurch gekennzeichnet, dass** das hydraulische System (28) eine Ventilanordnung (29), die angeschlossen ist, um einen Betätiger (30) zum Sperren des hinteren Differentials zu steuern, einen Betätiger (31) für die Kupplung (23), zwei Betätiger (32, 33), von denen einer das vordere Differential sperrt und der andere den Frontantrieb auskuppelt, und eine hydraulische Servolenkeinheit (34) umfasst, die auf doppeltwirkende Zylinder (35) des Lenksystems wirkt, wobei die Ventilanordnung (29) ein oder mehrere elektrische Ventile (36) und zumindest ein Proportionalventil (37) umfasst, das durch elektronische Steuermittel betätigt wird, wobei das Proportionalventil insbesondere der Steuerung der Kupplung (23) dient.

5. Getriebe nach Anspruch 4, **dadurch gekennzeichnet, dass** die hydraulische Servolenkeinheit (34) durch eine entsprechende Hydraulikpumpe mit einem Ansaugfilter versorgt wird.

## Revendications

1. Transmission (10) pour véhicules à moteur utilisés dans le domaine de l'agriculture, du jardinage, de la gestion de pépinières de plantes ou similaire, comprenant une prise de force (11) qui est reliée coaxialement à un arbre d'entraînement (12), et un ensemble de boîte d'engrènement (13) et d'embrayage à friction (23), reliés cinématiquement audit arbre d'entraînement (12) au moyen d'engrenages (18, 19, 20, 21) engagés en prise dont les arbres (12, 22) sont parallèles à celui-ci, ledit ensemble de boîte d'engrènement et d'embrayage à friction incluant exclusivement :
- un embrayage à friction (23) ;
- un premier arbre de transmission (14) qui est relié coaxialement audit arbre d'entraînement (12) et est contenu partiellement dans un carter (17) dont il fait saillie de façon à former une prise de force ;
- un second arbre de transmission (22) qui est parallèle audit premier arbre (14) ;
ledit premier arbre (14) supportant des engrenages (18, 19) qui s'engrènent avec ledit second arbre de transmission (22) ;
ledit embrayage à friction (23) étant supporté coaxialement à une extrémité dudit second arbre et comportant une première portion (24), reliée cinématiquement audit second arbre (22), tandis qu'une seconde portion (25) est supportée de manière rotative par ce dernier, ladite seconde portion (25) étant reliée cinématiquement, au moyen d'un engrenage intermédiaire ou d'une roue dentée folle (26), à un engrenage (27) qui est associé audit arbre d'entraînement (12).

2. Transmission selon la revendication 1,
**caractérisée en ce que** ledit premier arbre (14) est relié à l'arbre d'entraînement au moyen d'un couplage de type à tige ou à queue.

3. Transmission selon une ou plusieurs des revendications précédentes,
**caractérisée en ce que** ledit embrayage à friction (23) est du type à multiples disques.

4. Transmission selon la revendication 1 et commandée par un système hydraulique,
**caractérisée en ce que** le système hydraulique (28) comprend un ensemble de vannes (29) qui est relié de façon à commander un actionneur (30) pour bloquer un différentiel arrière, un actionneur (31) pour l'embrayage (23), deux actionneurs (32, 33), respectivement, pour bloquer un différentiel avant et pour désengager une transmission de traction avant, et un équipement de direction à actionnement hydraulique (34) qui agit sur des cylindres à double action (35) du système de direction, ledit ensemble de vannes (29) comprenant une ou plusieurs vannes électriques (36) et au moins une vanne proportionnelle (37) qui est gérée par des moyens de commande électronique, ladite vanne proportionnelle étant dédiée en particulier à la commande dudit embrayage (23).

5. Transmission selon la revendication 4,
**caractérisée en ce que** ledit équipement de direction à actionnement hydraulique (34) est alimenté par une pompe hydraulique correspondante, avec un filtre d'admission.
